# EUROPÄISCHE PATENTANMELDUNG

(11) **EP 2 977 905 A1**
(43) Veröffentlichungstag der Anmeldung: **27.01.2016**
(21) Anmeldenummer: 15177297.7
(22) Anmeldetag: 17.07.2015
(51) Int. Cl.: G06F 11/36, G06F 21/57

(54) **ANORDNUNG ZUR SELEKTIVEN FREIGABE EINER DEBUGGINGSCHNITTSTELLE**

(30) Priorität: 21.07.2014 DE 102014110197
(71) Anmelder: dSPACE digital signal processing and control engineering GmbH, 33102 Paderborn (DE)
(72) Erfinder: DRESSLER, Marc, 32805 Horn-Bad Meinberg (DE); BOCKELKAMP, Matthias, 33098 Paderborn (DE)

(57) **Zusammenfassung**

Gegenstand der Erfindung ist eine Anordnung zum Unterbinden einer Konfiguration eines ersten programmierbaren Hardwarebausteins (1), mit dem ersten programmierbaren Hardwarebaustein (1), einem zweiten programmierbaren Hardwarebaustein (2) und einem Schaltelement (3), wobei der erste programmierbare Hardwarebaustein (1) eine Konfigurationsschnittstelle (5) ausgestaltet zum Konfigurieren einer Logik (4) des ersten programmierbaren Hardwarebausteins (1), eine Datenschnittstelle (7), ausgestaltet zum Kommunizieren der Logik (4) mit dem zweiten programmierbaren Hardwarebaustein (2), eine Debuggingschnittstelle (8), ausgestaltet zum Debuggen und Konfigurieren der Logik (4) und eine Konfigurationsüberwachungsschnittstelle (9), ausgestaltet zum Signalisieren eines Konfigurationsvorgangs der Logik, (4) aufweist, wobei das Schaltelement (3) mit der Debuggingschnittstelle (8) derart verbunden und ausgestaltet ist, dass bei einem Konfigurationsvorgang ein Zugriff auf die Debuggingschnittstelle (8) unterbindbar ist.

## Beschreibung

Die Erfindung betrifft eine Anordnung und ein Verfahren zum Unterbinden einer Konfiguration bzw. Programmierung eines programmierbaren Hardwarebausteins, insbesondere eines PLDs oder eines Prozessors.

PLDs, Programmable Logic Devices, sind integrierte Schaltkreise der Digitaltechnik, in denen eine logische Schaltung programmiert bzw. konfiguriert werden kann. Dazu weist das PLD eine Konfigurationsschnittstelle auf, mittels derer die logische Schaltung in dem PLD konfiguriert werden kann, so konkret die durch die logische Schaltung abgebildeten Strukturvorschriften zur grundlegenden Funktionsweise einzelner universeller Blöcke in dem PLD und der Verschaltung untereinander festlegen. Zu den PLDs zählen insbesondere FPGAs, Field Programmable Gate Arrays, und CPLDs, Complex Programmable Logic Devices.

Prozessoren sind integrierte Schaltkreise der Digitaltechnik, in denen eine logische Schaltung weitgehend festverdrahtet vorliegt und in denen durch Aufspielen einer Software eine logische Funktion programmiert bzw. konfiguriert werden kann. Dazu weist der Prozessor eine Konfigurationsschnittstelle zum Aufspielen von Software bzw. zur Manipulation aufgespielter Software auf.

Unter einem programmierbaren Hardwarebaustein wird im Folgenden ein Prozessor, ein PLD oder eine Kombination aus beidem verstanden. Unter einer Logik wird im Folgenden eine Software in einem Prozessor oder eine logische Schaltung in einem PLD verstanden.

Vielfach weisen programmierbare Hardwarebausteine neben der Konfigurationsschnittstelle zum Konfigurieren des Hardwarebausteins eine weitere Debuggingschnittstelle auf, welche primär zum Debuggen der in dem programmierbaren Hardwarebaustein programmierten Logik verwendet werden kann, jedoch ebenso eine Konfiguration der Logik zulässt.

Einige Modelle weisen auch keine gesonderte Konfigurationsschnittstelle auf, weil seitens des Herstellers eine Konfiguration der Logik ausschließlich über die Debuggingschnittstelle vorgesehen ist. In diesem Fall ist es möglich, mittels einer außerhalb des Hardwarebausteins implementierten Schaltung eine separate Konfigurationsschnittstelle und eine separate Debuggingschnittstelle bereitzustellen. Beispielsweise kann die Debuggingschnittelle mit einem Schalter verbunden sein, der eingerichtet ist, die Debuggingschnittstelle wahlweise mit einer ersten externen Schnittstelle oder einer zweiten externen Schnittstelle zu verbinden, wobei die erste externe Schnittstelle vorgesehen ist, den programmierbaren Hardwarebaustein zu programmieren und die zweite externe Schnittstelle einem Anwender zum debuggen der in dem programmierbaren Hardwarebaustein programmierten Logik zur Verfügung gestellt wird, und wobei der Schalter eingerichtet ist, während eines Programmiervorgangs des Hardwarebausteins die Debuggingschnittstelle mit der ersten externen Schnittstelle zu verbinden, und die Debuggingschnittstelle mit der zweiten externen Schnittstelle zu verbinden, wenn keine Programmiervorgang des Hardwarebausteins stattfindet. Für die beanspruchte Erfindung ist es unbedeutend, ob eine Konfigurationsschnittstelle und eine Debuggingschnittstelle durch den programmierbaren Hardwarebaustein nativ als jeweils separate Schnittstelle zur Verfügung gestellt werden oder ob dies anhand einer außerhalb des Hardwarebausteins angeordneten Schaltung geschieht.

Sofern nun eine Konfiguration des programmierbaren Hardwarebausteins durch einen Anwender unterbunden werden soll, kann zunächst ein Zugriff des Anwenders auf die Konfigurationsschnittstelle gesperrt werden. Sofern der Anwender jedoch die Möglichkeit erhalten soll, die Logik des programmierbaren Hardwarebausteins zu debuggen, muss die Debuggingschnittstelle freigegeben werden. Das bedeutet dann jedoch auch bei den aus dem Stand der Technik bekannten Ausgestaltungen, dass der Anwender den programmierbaren Hardwarebaustein nicht nur debuggen, sondern ihn auch konfigurieren bzw. programmieren kann.

In bestimmten Fällen ist eine Programmierung des programmierbaren Hardwarebausteins über die Debuggingschnittstelle jedoch nicht erwünscht, beispielsweise, wenn ein erster programmierbarer Hardwarebaustein, insbesondere ein FPGA, mit einem zweiten programmierbaren Hardwarebaustein, insbesondere einem Prozessor, gekoppelt ist. Eine derartige Anordnung ist im Stand der Technik beispielsweise aus Computersystemen zur Echtzeitsimulation komplexer physikalischer und elektronischer Systeme bekannt. Dort ermöglicht sie es dem Prozessor, bestimmte, insbesondere besonders zeitkritische Rechenprozesse an das FPGA weiterzureichen.

In einer derartigen Anordnung ist es sinnvoll, die Konfiguration des FPGAs ausschließlich durch den Prozessor durchführen zu lassen. Ein Hersteller eines derartigen Computersystems bietet in der Regel auch ein Werkzeug zur Konfiguration bzw. Programmierung des gesamten Computersystems, inklusive des mit dem Prozessor gekoppelten FPGAs, an. Im Zuge einer Programmierung des Computersystems wird der Prozessor das gekoppelte FPGA über eine Konfigurationsschnittstelle konfigurieren, d.h. mit einer Logik beschreiben. Diese Logik kann neben einem vom Anwender frei konfigurierbaren Teil auch eine obligatorische, vom Anwender nicht oder nur begrenzt konfigurierbare Schnittstellenlogik enthalten, die im laufenden Betrieb den Datenaustausch mit dem gekoppelten Prozessor regelt. Auf diese Weise ist durch den Hersteller des Computersystems ein definiertes Kommunikationsverhalten zwischen Prozessor und FPGA vorgebbar, und es sind Sicherheitsmechanismen gegen fehlerhafte Programmierung vorgebbar. Ohne diese Sicherheitsmechanismen kann eine fehlerhafte Programmierung zu einem fehlerhaften Verhalten des Computersystems führen, schlimmstenfalls sogar zu einer Zerstörung des FPGAs oder anderer verbauter Hardware. Die Programmierbarkeit des FPGAs über die Debuggingschnittstelle bietet eine Möglichkeit, diese Sicherheitsmechanismen zu umgehen. Ein Programmierzugriff über die Debuggingschnittstelle bewirkt eine Überschreibung der gesamten vorhandenen Logik auf dem FPGA oder zumindest eines ausgezeichneten Teilbereichs dessen logischer Schaltung, und kann auf diese Weise auch eine Überschreibung der eigentlich obligatorischen Schnittstellenlogik bewirken. Aus diesem Grund ist im Stand der Technik in Computersystemen wie dem zuvor beschriebenen die Debuggingschnittstelle für den Anwender zumeist nicht zugänglich. Damit ist es dem Anwender aber auch nicht möglich, die Debuggingschnittstelle für andere Zwecke als die Programmierung des FPGAs zu nutzen, beispielsweise für die Überwachung von Variablen zum Zwecke eines Debuggings der FPGA-Logik.

Ausgehend von dieser Situation ist es Aufgabe der Erfindung, eine Anordnung zum Unterbinden einer Konfiguration eines programmierbaren Hardwarebausteins anzugeben, mittels derer Schaden von dem Hardwarebaustein oder mit dem Hardwarebaustein verbundener Hardware aufgrund einer unsachgemäßen oder unerlaubten Programmierung des Hardwarebausteins vermieden werden kann, dennoch bei Bedarf ein Zugriff auf den Hardwarebaustein via Debuggingschnittstelle zu anderen Zwecken als der Programmierung bzw. Konfiguration möglich ist.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Demnach erfolgt die Lösung der Aufgabe durch eine Anordnung zum Unterbinden einer Konfiguration eines ersten programmierbaren Hardwarebausteins, mit dem programmierbaren Hardwarebaustein und einem Schaltelement, wobei der programmierbare Hardwarebaustein eine Konfigurationsschnittstelle, ausgestaltet zur Programmierung einer Logik des programmierbaren Hardwarebausteins, eine Datenschnittstelle, ausgestaltet zum Datenaustausch mit der Hardware-Umgebung des programmierbaren Hardwarebausteins, und eine Debuggingschnittstelle, ausgestaltet zum Debuggen und Konfigurieren der Logik, aufweist, wobei das Schaltelement mit der Debuggingschnittstelle derart verbunden und ausgestaltet ist, dass bei einem Konfigurationsvorgang der logischen Schaltung ein Zugriff auf die Debuggingschnittstelle unterbindbar ist. Nach einer weiteren bevorzugten Ausgestaltung weist der programmierbare Hardwarebaustein eine Konfigurationsüberwachungsschnittstelle, ausgestaltet zum Signalisieren des Konfigurationsvorgangs der logischen Schaltung, auf.

In einer bevorzugten Ausgestaltung weist die Anordnung einen zweiten programmierbaren Hardwarebaustein auf, und die Datenschnittstelle ist ausgestaltet zum Kommunizieren des ersten mit dem zweiten programmierbaren Hardwarebaustein. In einer besonders bevorzugten Ausgestaltung der Anordnung ist der erste programmierbare Hardwarebaustein ein FPGA und der zweite programmierbare Hardwarebaustein ein FPGA oder ein Prozessor.

Wesentlicher Punkt der Erfindung ist somit das Vorsehen eines Schaltelements, durch welches bei einem Konfigurationsvorgang ein Zugriff auf die Debuggingschnittstelle unterbindbar ist, wobei vorzugsweise das Schaltelement derart ausgestaltet ist, dass der Zugriff auf die Debuggingschnittstelle bei einem Konfigurationsvorgang unterbunden ist. Das bedeutet, dass einerseits eine Konfiguration der Logik des programmierbaren Hardwarebaustein mittels der Konfigurationsschnittstelle möglich ist, und auch ebenso ein Debuggen der Logik mit der Debuggingschnittstelle durchgeführt werden kann, jedoch bei einem Konfigurationsvorgang der Zugriff auf die Debuggingschnittstelle gesperrt werden kann.

Der programmierbare Hardwarebaustein ist dazu bevorzugt derart ausgestaltet, dass sowohl bei einer Konfiguration bzw. Programmierung über die Konfigurationsschnittstelle als auch bei einer Programmierung bzw. Konfiguration über die Debuggingschnittstelle ein Konfigurationsvorgang signalisiert wird. Alternativ kann der Konfigurationsvorgang, so die Programmierung bzw. Konfiguration der Logik, ebenso aus einem an die Debuggingschnittstelle übertragenen Ansteuersignal erkannt werden, so beispielsweise durch Extraktion eines Konfigurationsbefehls aus dem Ansteuersignal. Dazu kann beispielsweise eine geeignet ausgestaltete Überwachungseinheit vorgesehen sein, die das Ansteuersignal auf Konfigurationsbefehle hin untersucht. Im Folgenden werden beide Varianten, also das Vorhandensein der Konfigurationsüberwachungsschnittstelle sowie das Nichtvorhandensein der Konfigurationsüberwachungsschnittstelle, als gleichbedeutend beschrieben.

Die Signalisierung des Konfigurationsvorgangs erfolgt vorzugsweise durch Ausgabe eines logischen Zustands von 0 oder 1, oder durch eine steigende oder fallende Flanke. Beispielsweise, wenn der programmierbare Hardwarebaustein über die Konfigurationsschnittstelle oder die Debuggingschnittstelle programmiert wird, also ein Konfigurationsvorgang stattfindet, durch Ausgabe einer logischen 0, und, nachdem die Konfiguration des Hardwarebausteins abgeschlossen ist, durch Ausgabe einer logischen 1 auf der Konfigurationsüberwachungsschnittstelle. Für diesen Fall wäre das Schaltelement bevorzugt derart ausgestaltet, dass bei einer logischen 0 als Signal auf der Konfigurationsüberwachungsschnittstelle oder dem Ansteuersignal für die Debuggingschnittstelle ein Konfigurationsvorgang des programmierbaren Hardwarebausteins erkannt wird, so dass ein Zugriff auf die Debuggingschnittstelle durch das Schaltelement unterbindbar ist, vorzugsweise unterbunden wird.

Bevorzugt ist der programmierbare Hardwarebaustein ein erster programmierbarer Hardwarebaustein und die Datenschnittstelle ist ausgestaltet zum Kommunizieren mit einem zweiten programmierbaren Hardwarebaustein. Besonders bevorzugt ist der erste programmierbare Hardwarebaustein ein FPGA und der zweite programmierbare Hardwarebaustein ein Prozessor. Das FPGA kann grundsätzlich als ein aus dem Stand der Technik bekanntes Field Programmable Gate Array ausgestaltet sein, so als integrierter Schaltkreis der Digitaltechnik, in dem die logische Schaltung programmiert bzw. konfiguriert werden kann. Über eine Datenschnittstelle kommuniziert das FPGA bzw. die logische Schaltung des FPGAs mit dem Prozessor. Der Prozessor kann ebenso als ein beliebiger aus dem Stand der Technik bekannter Prozessor ausgestaltet sein. Das FPGA ist vorzugsweise derart ausgestaltet, dass die Konfigurierung des FPGAs einerseits über die Konfigurationsschnittstelle sowie andererseits über die Debuggingschnittstelle erfolgen kann, wobei jedoch bevorzugt ist, dass eine Konfigurationseinrichtung zum Konfigurieren des FPGAs mittels der Konfigurationsschnittstelle mit dem FPGA verbunden wird.

Durch die Erfindung lässt sich ein fehlerhaftes Verhalten eines programmierbaren Hardwarebausteins sowie eine unbeabsichtigte Zerstörung des programmierbaren Hardwarebausteins, sowie der mit dem programmierbaren Hardwarebaustein verbundenen Hardware, beispielsweise eines Prozessors, aufgrund unerlaubter, fehlerhafter Programmierung des programmierbaren Hardwarebausteins dadurch verhindern, dass ein Konfigurationszugriff auf die logische Schaltung des programmierbaren Hardwarebausteins nur mittels der Konfigurationsschnittstelle möglich ist, jedoch nicht, oder nur unter besonderen Umständen, über die Debuggingschnittstelle. Parallel dazu ist die Debuggingschnittstelle jedoch weiterhin für andere Anwendungen, insbesondere für ein Debuggen der Logik des programmierbaren Hardwarebausteins verwendbar. Mit anderen Worten wird durch das Schaltelement eine Kontrollinstanz geschaffen, durch die eine Datenübertragung über die Debuggingschnittstelle in Bezug auf eine Konfiguration des programmierbaren Hardwarebausteins steuerbar ist, wobei durch die Kontrollinstanz bei einem nicht autorisierten Programmieren des programmierbaren Hardwarebausteins ein Zugriff auf die Debuggingschnittstelle unterbindbar ist, oder anhand vorher festgelegter Parameter beispielsweise anwendungsspezifisch erlaubbar ist.

Nach einer weiteren bevorzugten Ausgestaltung ist das Schaltelement mit der Konfigurationsüberwachungsschnittstelle derart verbunden und ausgestaltet, dass bei Signalisierung eines Konfigurationsvorgangs durch die Konfigurationsüberwachungsschnittstelle ein Zugriff auf die Debuggingschnittstelle unterbindbar ist, vorzugsweise unterbunden wird. Nach dieser Ausgestaltung ist der Zugriff auf die Debuggingschnittstelle unterbindbar bzw. wird unterbunden, wenn durch die Konfigurationsüberwachungsschnittstelle ein Konfigurationsvorgang signalisiert wird. Die Signalisierung des Konfigurationsvorgangs kann beispielsweise durch eine an der Konfigurationsüberwachungsschnittstelle ausgegebene steigende Flanke oder fallende Flanke eines Signals erfolgen, oder aber durch eine Änderung eines Signals von logisch 0 auf logisch 1 bzw. umgekehrt. Die Konfigurationsschnittstelle selbst ist bevorzugt derart ausgestaltet, dass eine Konfigurationsänderung der logischen Schaltung des FPGAs erkannt wird.

Nach einer weiteren bevorzugten Ausgestaltung ist das Schaltelement derart ausgestaltet, dass bei einem Konfigurationsvorgang oder bei einem Erkennen eines Konfigurationsvorgangs der Logik des programmierbaren Hardwarebausteins die Anordnung ausgeschaltet wird, so vorzugsweise in einem strom- und/oder spannungslosen Zustand überführt wird. Die Signalisierung des Konfigurationsvorgangs erfolgt bevorzugt durch ein von dem programmierbaren Hardwarebaustein erzeugtes Signal, welches sich während oder unmittelbar nach Beginn einer Konfigurierung oder Programmierung des programmierbaren Hardwarebausteins verändert und damit einen Beginn, den Fortschritt und/oder das Ende des Konfigurationsvorgangs anzeigt.

Weiter bevorzugt wird die Signalisierung des Konfigurationsvorgangs bzw. das entsprechende Signal zur Anzeige des Beginns, der Durchführung und/oder des Endes eines Vorgangs zur Konfigurierung des programmierbaren Hardwarebausteins durch einen Teil des programmierbaren Hardwarebausteins bereitgestellt, der nicht konfigurierbar ist. Das bedeutet, dass bei einer derartigen Ausgestaltung die logische Schaltung des programmierbaren Hardwarebausteins nicht derart konfigurierbar ist, dass die Signalisierung eines Konfigurationsvorgangs nicht ausgebbar ist, also die Signalisierung des Konfigurationsvorgangs zwangsweise durch die Konfigurationsüberwachungsschnittstelle bereitgestellt wird. Alternativ kann die Signalisierung des Konfigurationsvorgangs auch durch die logische Schaltung erfolgen oder durch externe Beschaltung, wie beispielsweise Pull-up- oder Pull-down-Widerstände erzeugt werden.

Nach einer weiteren bevorzugten Ausgestaltung weist die Anordnung ein Konfigurationsschaltelement auf, welches zum Ansteuern des Schaltelements ausgestaltet ist. Durch eine derartige Ausgestaltung kann selbst bei Signalisierung eines Konfigurationsvorgangs durch das Konfigurationsschaltelement die Konfigurierung der logischen Schaltung über die Debuggingschnittstelle zugelassen werden, so durch entsprechende Ansteuerung des Schaltelements durch das Konfigurationsschaltelement. Das bedeutet, dass, beispielsweise durch einen zuvor definierten Benutzereingriff, mittels der Anordnung durch die Debuggingschnittstelle nicht nur die logische Schaltung des FPGAs debuggt werden kann, sondern auch die Konfiguration der logischen Schaltung mittels der Debuggingschnittstelle, und damit zusätzlich zur Konfigurationsschnittstelle, programmiert werden kann.

Darüber hinaus ist jedoch besonders bevorzugt, dass das Konfigurationsschaltelement mit der Konfigurationsüberwachungsschnittstelle verbunden und ausgestaltet ist, bei Signalisierung eines Konfigurationsvorgangs den Zugriff auf die Debuggingschnittstelle durch Ansteuerung des Schaltelements zu unterbinden. Bei Erkennen eines Konfigurationsvorgangs durch die Konfigurationsüberwachungsschnittstelle erfolgt also nicht eine direkte Ansteuerung des Schaltelements zum Unterbinden des Zugriffs auf die Debuggingschnittstelle, sondern die Ansteuerung des Schaltelements erfolgt durch die Konfigurationsüberwachungsschnittstelle.

Ganz besonders bevorzugt ist das Schaltelement mit der Debuggingschnittstelle mittels des Konfigurationsschaltelements derart verbunden, dass bei einem Konfigurationsvorgang ein Zugriff auf die Debuggingschnittstelle wahlweise möglich oder nicht möglich ist. Bei einer derartigen Ausgestaltung kann selbst bei einem Konfigurationsvorgang, bei dem ein Zugriff auf die Debuggingschnittstelle mittels des Schaltelements unterbindbar wäre, durch das Konfigurationsschaltelement dennoch ein Zugriff auf die Debuggingschnittstelle ermöglicht werden.
Weiter bevorzugt ist das Konfigurationsschaltelement zwischen der Debuggingschnittstelle und dem Schaltelement angeordnet, so dass durch das Konfigurationsschaltelement eine Verbindung zwischen dem Schaltelement mit der Debuggingschnittstelle ermöglicht oder gesperrt werden kann. Darüber hinaus kann durch das Konfigurationsschaltelement an der Debuggingschnittstelle auch ein Signalpegel zur Verfügung gestellt werden, so beispielsweise logisch 0 oder logisch 1. Weiter bevorzugt weist das Konfigurationsschaltelement eine Logik auf, mittels derer ein Zugriff auf die Debuggingschnittstelle abhängig von vorgegebenen Parametern steuerbar ist. Weiter bevorzugt steht die Logik in Kommunikationsverbindung mit dem programmierbaren Hardwarebaustein und/oder einem zweiten programmierbaren Hardwarebaustein und/oder einer externen Konfiguriereinrichtung für den programmierbaren Hardwarebaustein.

Nach einer bevorzugten Weiterbildung der Erfindung ist das Konfigurationsschaltelement ausgestaltet, aus einem zur Debuggingschnittstelle übertragenen Ansteuersignal einen Konfigurationsvorgang zu extrahieren. Mit anderen Worten ist das Konfigurationsschaltelement bevorzugt weitergebildet, das zur Debuggingschnittstelle übertragene Ansteuersignal auf Bitfolgen hin zu analysieren, mittels derer eine Konfiguration des programmierbaren Hardwarebausteins vornehmbar ist. Das Konfigurationsschaltelement überwacht also die Debuggingschnittstelle hinsichtlich an die Debuggingschnittstelle gesandter Ansteuersignale und wertet die Ansteuersignale dahingehend aus, ob durch ein Ansteuersignal ein Konfigurationsvorgang des programmierbaren Hardwarebausteins bewirkt wird.

Beim Erkennen eines Versuchs einer Umprogrammierung des programmierbaren Hardwarebausteins kann beispielsweise noch vor dem Löschen bzw. Umprogrammieren der Logik des programmierbaren Hardwarebausteins der Konfigurationsvorgang erkannt und der Zugriff auf die Debuggingschnittstelle gesperrt werden. Die Sperrung des Zugriffs auf die Debuggingschnittstelle durch das Schaltelement kann für eine zu definierende Zeit erfolgen, oder aber auch bis hin zu einem weiteren Ereignis, so ein Aus-/Einschalten der Anordnung. Dadurch lassen sich mehrfache direkt aufeinanderfolgende unautorisierte Zugriffe zur Änderung der Konfiguration des programmierbaren Hardwarebausteins über die Debuggingschnittstelle verhindern.

Nach einer bevorzugten Weiterbildung kann das Konfigurationsschaltelement derart ausgestaltet sein, dass bei einem Konfigurationsvorgang ein Aus-/Einschalten und/oder ein Zurücksetzen in den Einschaltzustand der Anordnung und/oder des programmierbaren Hardwarebausteins erfolgt. Ebenso kann vorgesehen sein, dass der programmierbare Hardwarebaustein bei einer unautorisierten Umprogrammierung, so dem Erkennen eines nicht gewünschten Konfigurationsvorgangs, wieder eine Konfiguration für die logische Schaltung durch die Konfigurationsschnittstelle erhält, die einem Ausgangszustand oder einem vorab gespeicherten Stand entspricht. Sobald also ein Anwender durch unautorisierten Zugriff über die Debuggingschnittstelle eine bisherige Konfiguration des programmierbaren Hardwarebausteins löscht, kann automatisch eine neue Programmierung des programmierbaren Hardwarebausteins mit der bisherigen Konfiguration erfolgen.

Die Anordnung kann dazu eine Konfiguriereinrichtung aufweisen, die mit der Konfigurationsschnittstelle verbunden ist. Ebenso kann die Anlage derart ausgebildet sein, dass zwar ein unautorisierter Zugriff über die Debuggingschnittstelle zur Umkonfigurierung des programmierbaren Hardwarebausteins erkannt wird, der Zugriff auf die Debuggingschnittstelle jedoch nicht unterbunden wird. Nach einem Neustart des derart umprogrammierten Hardwarebausteins kann dann geprüft werden, ob der Hardwarebaustein ein definiertes Verhalten aufweist, so beispielsweise an einer Schnittstelle des programmierbaren Hardwarebausteins ein vorab definiertes Signal anliegt. Sofern das Verhalten vorliegt, kann die Umprogrammierung zugelassen werden. Andernfalls kann die Konfiguration des programmierbaren Hardwarebausteins gelöscht und über die Konfigurationsschnittstelle mit einer zuvor gespeicherten Konfiguration beschrieben werden.

Vorteil einer derartigen Ausgestaltung ist, dass unrichtige, unautorisierte Konfigurationen zwar aufgespielt werden können, jedoch in der Regel nicht zu Schäden führen, da die Anordnung sofort automatisch überprüfen kann, ob die Umkonfigurierung problematisch oder gegebenenfalls doch unproblematisch wäre. Bei einer problematischen Umkonfigurierung kann beispielsweise die Beschaltung zwischen dem programmierbaren Hardwarebaustein und anderen Komponenten, die bei einer problematischen Umkonfigurierung Schaden nehmen könnten, in einen Zustand gebracht werden, der einen Schaden verhindert. Ebenso kann bei Erkennen eines unerlaubten Konfiguriervorgangs eine Signalisierung an den Anwender oder Hersteller erfolgen, so dass dieser über weitere Schritte entscheiden kann.

Nach einer weiteren bevorzugten Ausgestaltung weist das Konfigurationsschaltelement eine Speichereinrichtung auf, wobei in der Speichereinrichtung eine Information hinterlegt ist, nach der sich bestimmt, ob der Zugriff über das Konfigurationsschaltelement möglich oder nicht möglich ist. Die Information ist vorzugsweise als eine Lizenz oder ein Lizenzschlüssel ausgestaltet, nach der sich bestimmt, ob ein Anwender Zugriff auf die Debuggingschnittstelle zur Änderung der Konfiguration des programmierbaren Hardwarebausteins hat oder nicht. Denn wie zuvor ausgeführt, ist mittels des Konfigurationsschaltelements steuerbar, ob durch die Debuggingschnittstelle eine Konfigurationsänderung des programmierbaren Hardwarebausteins durchführbar ist. Die Speichereinrichtung kann beispielsweise ein nicht flüchtiger Speicher sein, in dem die Lizenz hinterlegbar ist. Ebenso ist denkbar, dass ein Anwender die Lizenz aus dem Internet herunterladen und in der Speichereinrichtung hinterlegen kann.

Nach einer ganz besonders bevorzugten Ausgestaltung ist das Konfigurationsschaltelement als CPLD, als FPGA, als Prozessor oder als Kombination der genannten programmierbaren Hardwarebausteine ausgestaltet. Darüber hinaus kann das Konfigurationsschaltelement ebenso als mechanischer Jumper, Schalter oder ein anderes Bauteil wie ein Pull-up- und/oder ein Pull-down-Widerstand ausgestaltet sein.

Nach einer bevorzugten Weiterbildung ist die Konfigurationsüberwachungsschnittstelle als Teil der Datenschnittstelle ausgestaltet, wobei der programmierbare Hardwarebaustein eine Logik aufweist, die an dem Teil der Datenschnittstelle einen Konfigurationsvorgang signalisiert. Beispielsweise weisen die aus dem Stand der Technik bekannten FPGAs nicht immer eine separat ausgeführte Konfigurationsüberwachungsschnittstelle auf. In diesem Fall kann beispielsweise ein Pin der Datenschnittstelle für die Funktionalität der Konfigurationsüberwachungsschnittstelle verwendet werden. In der Regel ist es bei den aus dem Stand der Technik bekannten FPGAs so, dass während eines Programmiervorgangs die Datenschnittstelle, so insbesondere die Ausgänge der Datenschnittstelle, einen definierten Wert annehmen, so beispielsweise logisch 1, logisch 0, weak-high, weak-low oder high impedance. Dieses Signal kann bei der vorliegenden Ausgestaltung verwendet werden, um einen Konfigurationsvorgang zu erkennen und entsprechend über die Konfigurationsüberwachungsschnittstelle zu signalisieren. In einer möglichen Ausgestaltung versetzt der programmierbare Hardwarebaustein die Ausgänge seiner Datenschnittstelle während eines Programmiervorgangs in einen weak-high-Zustand, aus dem an einem Ausgang aus diesem weak-high-Zustand ein Signal "logisch 1" erkannt und dieses Signal verwendet wird, einen Konfigurationsvorgang festzustellen.

Nach einer anderen bevorzugten Weiterbildung ist die Konfigurationsüberwachungsschnittstelle als Teil einer Datenschnittstelle ausgestaltet, wobei der programmierbare Hardwarebaustein eine Logik aufweist, die an dem Teil der Datenschnittstelle den Abschluss eines Konfigurationsvorgangs signalisiert. In einer möglichen Ausgestaltung gibt die Logik an einer Anzahl vorgegebener Datenausgänge eine vorgegebene Kombination von Signalen der Typen logisch 1 und logisch 0 aus, und die Ausgabe dieser Kombination von Signalen wird verwendet, um den Abschluss eines Konfigurationsvorgangs zu erkennen. Dadurch lässt sich die erfindungsgemäße Anordnung auch auf beliebigen aus dem Stand der Technik bekannten programmierbaren Hardwarebausteinen implementieren, ohne dass der programmierbare Hardwarebaustein eine separate, dedizierte Konfigurationsüberwachungsschnittstelle aufweisen muss.

Das Schaltelement kann grundsätzlich beliebig ausgestaltet sein, wobei besonders bevorzugt das Schaltelement als schaltbarer Bustreiber ausgestaltet ist, wobei weiter bevorzugt die Signalisierung des Konfigurationsvorgangs durch ein über eine separate, dedizierte Konfigurationsüberwachungsschnittstelle ausgegebenes Konfigurationssignal bewerkstelligt wird, beispielsweise durch die CONF_DONE- und INIT_DONE-Signale der FPGAs der Firma Altera Corporation. Nach einer weiteren bevorzugten Ausgestaltung ist die Debuggingschnittstelle als JTAG-Schnittstelle vorzugsweise nach IEEE-Standard 1149.1 ausgestaltet. Weiter bevorzugt ist die Datenschnittstelle als Datenbus ausgestaltet.

Nach diesen Ausgestaltungen kann die JTAG-Schnittstelle über einen Bustreiber geführt sein, um die JTAG-Schnittstelle vor schädlichen Einflüssen, wie Überspannung, Verpolung etc. von außen zu schützen. Der Bustreiber verfügt vorzugsweise über einen OutputEnable-Eingang, mit dem ein Ausgangstreiber des Bustreibers deaktiviert werden kann. Nach einer bevorzugten Ausgestaltung der Erfindung ist nun das Konfigurationssignal des Hardwarebausteins mit dem OutputEnable-Eingang des Bustreibers verbunden, so dass die JTAG-Schnittstelle für den Anwender erst dann zugänglich ist, wenn der programmierbare Hardwarebaustein fertig konfiguriert ist. In diesem Zustand kann der Anwender über die JTAG-Schnittstelle den programmierbaren Hardwarebaustein debuggen.

Bei dem Versuch, den programmierbaren Hardwarebaustein zu konfigurieren, wird das Konfigurationssignal aktiv, sodass durch den Bustreiber die Verbindung getrennt wird und ein Umkonfigurieren des programmierbaren Hardwarebausteins auf eine möglicherweise schädliche Konfiguration unterbunden wird. Um dem Zulieferer der Anordnung während der Entwicklungsphase zur Erstellung seiner Konfiguration trotzdem uneingeschränkten Zugang zur JTAG-Schnittstelle zu geben, kann die Verbindung beispielsweise über einen Jumper, einen Null-Ohm-Widerstand oder das Konfigurationsschaltelement geführt werden. Wie bereits ausgeführt, kann der Zugriff auf die JTAG-Schnittstelle über ein CPLD, über ein FPGA, einen Prozessor oder einer Kombination zweier der genannten Typen von programmierbaren Hardwarebausteinen, so insbesondere zur Steuerung des OutputEnable-Signals der JTAG-Schnittstelle, kontrolliert werden.

Mittels der weiteren zuvor genannten Ausgestaltung ist es sogar möglich, das Debuggen des programmierbaren Hardwarebausteins per JTAG-Schnittstelle softwaremäßig durch als Lizenz gespeicherte Information nur für einen Teil der Anwender freizuschalten, die die entsprechende Lizenz erworben haben. Ebenso kann die Freischaltung nur für solche Anwender erfolgen, die auf jegliche Gewährleistung verzichtet haben, und dann im Gegenzug uneingeschränkten Zugang zur JTAG-Schnittstelle erhalten. Die Aufgabe der Erfindung wird weiterhin gelöst durch ein Verfahren zum Unterbinden einer Konfiguration eines programmierbaren Hardwarebausteins, wobei der programmierbare Hardwarebaustein eine Konfigurationsschnittstelle, ausgestaltet zum Konfigurieren einer Logik des programmierbaren Hardwarebausteins, eine Datenschnittstelle, ausgestaltet zum Datenaustausch des programmierbaren Hardwarebausteins mit der Hardwareumgebung, eine Debuggingschnittstelle, ausgestaltet zum Debuggen und Konfigurieren der Logik, und eine Konfigurationsüberwachungsschnittstelle, ausgestaltet zum Signalisieren eines Konfigurationsvorgangs der Logik, aufweist, mit dem Schritt: Unterbinden eines Zugriffs auf die Debuggingschnittstelle bei Signalisierung eines Konfigurationsvorgangs.

Durch eine derartige Ausgestaltung lässt sich in granularer Weise der Zugriff eines Anwenders auf die Debuggingschnittstelle steuern. Weitere Ausgestaltungen des erfindungsgemäßen Verfahrens ergeben sich dem Fachmann in Analogie zu den zuvor diskutierten Ausgestaltungen der Anordnung.

Nachfolgend wird die Erfindung unter Bezugnahme auf die anliegende Zeichnung anhand bevorzugter Ausführungsformen näher erläutert.

Es zeigen
- Fig. 1: eine Anordnung gemäß einer ersten bevorzugten Ausführungsform der Erfindung in einer schematischen Ansicht,
- Fig. 2: eine Anordnung gemäß einer zweiten bevorzugten Ausführungsform der Erfindung in einer schematischen Ansicht, und
- Fig. 3: eine Anordnung gemäß einer dritten bevorzugten Ausführungsform der Erfindung in einer schematischen Ansicht.

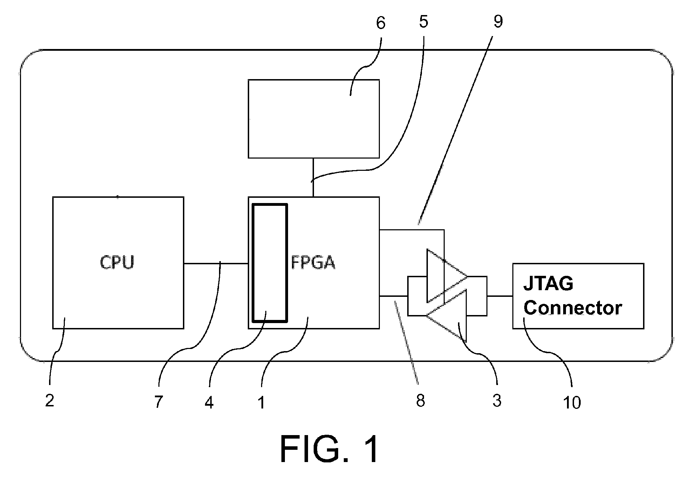

Die Figuren 1 bis 3 zeigen eine Anordnung zum Unterbinden einer Konfiguration eines FPGAs 1 in drei unterschiedlichen bevorzugten Ausführungsformen.

Wie aus Fig. 1 ersichtlich, weist die Anordnung neben dem FPGA 1 jeweils einen Mikroprozessor 2 sowie ein Schaltelement 3 auf. Das FPGA 1 weist eine logische Schaltung 4 auf, die über eine Konfigurationsschnittstelle 5 durch eine Konfigurationseinrichtung 6 konfigurierbar bzw. programmierbar ist. Zudem steht die logische Schaltung 4 in Kommunikationsverbindung mit dem Mikroprozessor 2 über eine Datenschnittstelle 7, welche vorliegend als Datenbus ausgestaltet ist. Ferner weist das FPGA 1 eine Debuggingschnittstelle 8 auf, welche als JTAG-Schnittstelle nach IEEE-Standard 1149.1 zum Debuggen und Konfigurieren der logischen Schaltung 4 ausgestaltet ist. Schließlich weist das FPGA 1 noch eine Konfigurationsüberwachungsschnittstelle 9 auf, welche vorliegend als ConfigDone-Schnittstelle zum Signalisieren eines Konfigurationsvorgangs der logischen Schaltung 4 ausgestaltet ist. Ein JTAG-Connector 10 ermöglicht dem Anwender Zugriff auf die Debuggingschnittstelle 8 des FPGAs 1.

Das FPGA 1 ist derart ausgestaltet, dass bei einer Konfiguration der logischen Schaltung 4, sei es via Konfigurationsschnittstelle 5 oder via Debuggingschnittstelle 8, der Beginn einer Änderung der Konfiguration des FPGAs 1 bzw. der logischen Schaltung 4 an der Konfigurationsüberwachungsschnittstelle 9 signalisiert wird, so beispielsweise durch Änderung eines Signalpegels von logisch 1 auf 0.

Wie aus Fig. 1 weiter ersichtlich, ist das Schaltelement 3 als Bustreiber ausgeführt und mit der Debuggingschnittstelle 8 derart verbunden und ausgestaltet, dass bei einem Konfigurationsvorgang ein Zugriff auf die Debuggingschnittstelle 8 unterbindbar ist. Konkret weist der Bustreiber 3 einen OutputEnable-Eingang auf, mit dem der Bustreiber 3 bzw. ein Ausgangstreiber des Bustreibers 3 deaktiviert werden kann. Das ConfigDone-Signal, welches an der Konfigurationsüberwachungsschnittstelle 9 durch das FPGA 1 bereitgestellt wird, ist mit dem OutputEnable-Eingang des Bustreibers 3 verbunden.

Sofern nun durch das ConfigDone-Signal eine Programmierung des FPGAs 1 bzw. eine Programmierung der logischen Schaltung 4 signalisiert wird, wird durch den Bustreiber 3 der Zugriff auf die Debuggingschnittstelle 8 unterbunden. In diesem Fall kann über den JTAG-Connector 10 nicht mehr auf die JTAG-Schnittstelle 8 zugegriffen werden. Dadurch wird erreicht, dass eine Konfigurierung des FPGAs 1 einerseits durch die Konfiguriereinrichtung 6 mittels der Konfigurationsschnittstelle 5 möglich ist, und andererseits, im Regelbetrieb, mittels des JTAG-Connectors 10 über die JTAG-Schnittstelle 8 ein Debuggen des FPGAs 1 bzw. der logischen Schaltung 4 des FPGAs 1 möglich ist. Sofern jedoch mittels des JTAG-Connectors 10 eine Programmierung über die JTAG-Schnittstelle 8 des FPGAs 1 stattfindet, signalisiert die Konfigurationsüberwachungsschnittstelle 9 den Konfigurationsvorgang. Da die Konfigurationsüberwachungsschnittstelle 9 mit dem Schaltelement 3 verbunden ist, wird in diesem Fall der Zugriff auf die JTAG-Schnittstelle 8 unterbunden.

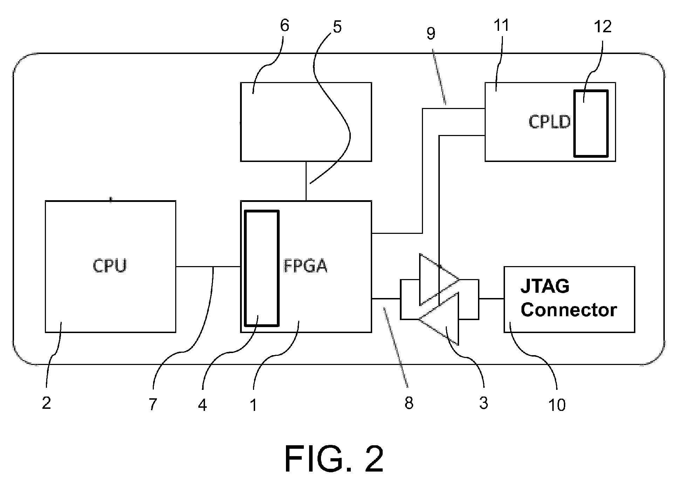

Fig. 2 zeigt eine zweite Ausführungsform der Anordnung mit einem Konfigurationsschaltelement 11, welches vorliegend als CPLD zum Ansteuern des Schaltelements 3 ausgestaltet ist. Zudem ist das Konfigurationsschaltelement 11 mit der Konfigurationsüberwachungsschnittstelle 9 verbunden. Das bedeutet, dass bei Signalisierung eines Konfigurationsvorgangs mittels des CPLDs 11 der Zugriff auf die JTAG-Schnittstelle 8 durch Ansteuerung des Bustreibers 3 durch das CPLD 11 unterbindbar ist. Andererseits kann das CPLD 11 aber auch derart programmiert sein, dass trotz Signalisierung eines Konfigurationsvorgangs durch die Konfigurationsüberwachungsschnittstelle 9 das CPLD 11 keine Unterbrechung des Zugriffs auf die Debuggingschnittstelle 8 durch entsprechende Ansteuerung des Bustreibers 3 bewirkt. Das CPLD 11 kann auch derart programmiert sein, dass es in Abhängigkeit von einem von einer anderen Komponente ausgehenden Signal, beispielsweise von der CPU 2, bei einer Signalisierung eines Konfigurationsvorgangs durch die Konfigurationsüberwachungsschnittstelle 9 den Zugriff auf die Debuggingschnittstelle 8 unterbricht oder nicht unterbricht.

Das Konfigurationsschaltelement 11 kann ferner eine Speichereinrichtung 12 aufweisen, wobei in der Speichereinrichtung 12 eine Information, so eine Lizenz, hinterlegt ist, nach der sich bestimmt, ob der Zugriff auf die Debuggingschnittstelle 8 durch das Konfigurationsschaltelement 11 erlaubt wird oder nicht. Sofern beispielsweise ein Anwender eine entsprechende Lizenz erworben hat, kann diese Lizenz die Möglichkeit beinhalten, dass der Anwender über die Debuggingschnittstelle 8 nicht nur ein Debugging der logischen Schaltung 4 durchführen, sondern auch die Konfigurierung der logischen Schaltung 4 bewirken kann, selbst wenn durch die Konfigurationsüberwachungsschnittstelle 9 ein Signal an das Konfigurationsschaltelement 11 gesendet wird, wonach ohne entsprechende Lizenz ein Zugriff auf die Debuggingschnittstelle 8 zu unterbinden wäre.

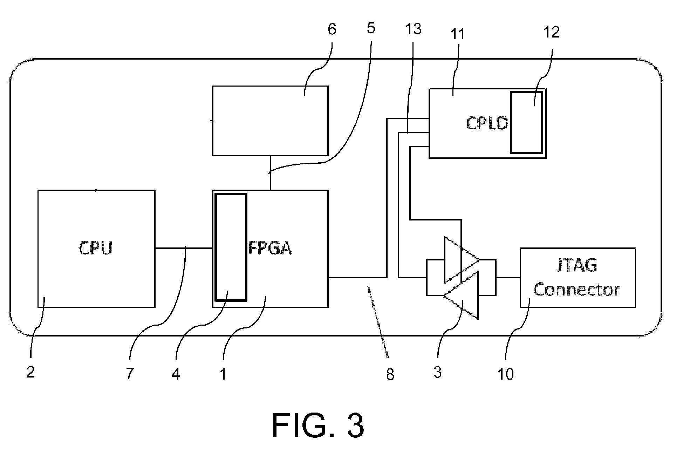

Fig. 3 zeigt eine dritte bevorzugte Ausführungsform der Anordnung, bei der das Schaltelement 3 mit der Debuggingschnittstelle 8 mittels des Konfigurationsschaltelements 11 derart verbunden ist, dass aus einem zur Debuggingschnittstelle 8 von dem Schaltelement 3 übertragenen Ansteuersignal 13 ein Konfigurationsvorgang extrahierbar ist. Das bedeutet, dass das Konfigurationsschaltelement 11 in der Lage ist, aus dem Ansteuersignal zu erkennen, so beispielsweise durch Untersuchung der in dem Ansteuersignal 13 enthaltenen Bitfolgen, ob durch den JTAG-Connector 10 ein Konfigurationsvorgang über die Debuggingschnittstelle 8 initiiert wird. Sofern das Konfigurationsschaltelement 11 entsprechende Bitfolgen erkennt, kann durch das Konfigurationsschaltelement 11 der Zugriff auf die Debuggingschnittstelle 8 unterbrochen werden. Dabei kann es ebenso möglich sein, dass das Konfigurationsschaltelement 11 aus dem Ansteuersignal 13 die Bitfolgen zur Konfigurierung des FPGAs 1 löscht oder durch andere Bitfolgen ersetzt, die gerade nicht eine Konfigurierung des FPGAs 1 bewirken. In einer vorteilhaften Ausgestaltung dieser Ausführungsform der Anordnung ist das Konfigurationsschaltelement 11 zudem mit einem Verzögerungselement (nicht dargestellt), beispielsweise einer Delay-Einheit, versehen, das die Übertragung der Daten zum FPGA 1 zeitlich verzögert und dadurch dem Konfigurationsschaltelement 11 hinreichend Zeit gibt, die an den FPGA 1 übertragenen Daten auszuwerten und Bitfolgen zur Konfigurierung des FPGAs 1 zu löschen oder durch andere Bitfolgen zu ersetzen.

**Bezugszeichenliste**

| | |
|---|---|
| Erster programmierbarer Hardwarebaustein | 1 |
| Zweiter programmierbarer Hardwarebaustein | 2 |
| Schaltelement | 3 |
| Logik | 4 |
| Konfigurationsschnittstelle | 5 |
| Konfiguriereinrichtung | 6 |
| Datenschnittstelle | 7 |
| Debuggingschnittstelle | 8 |
| Konfigurationsüberwachungsschnittstelle | 9 |
| JTAG-Connector | 10 |
| Konfigurationsschaltelement | 11 |
| Speichereinrichtung | 12 |
| Ansteuersignal für die Debuggingschnittstelle | 13 |

## Patentansprüche

1. Anordnung zum Unterbinden einer Konfiguration eines ersten programmierbaren Hardwarebausteins (1), mit dem ersten programmierbaren Hardwarebaustein (1), und einem Schaltelement (3), wobei
der erste programmierbare Hardwarebaustein (1) eine Konfigurationsschnittstelle (5), ausgestaltet zum Konfigurieren einer Logik (4) des ersten programmierbaren Hardwarebausteins (1), eine Datenschnittstelle (7) und eine Debuggingschnittstelle (8), ausgestaltet zum Debuggen und Konfigurieren der Logik (4) aufweist, wobei
das Schaltelement (3) mit der Debuggingschnittstelle (8) derart verbunden und ausgestaltet ist, dass bei einem Konfigurationsvorgang der Logik (4) ein Zugriff auf die Debuggingschnittstelle (8) unterbindbar ist.

2. Anordnung nach Anspruch 1, wobei der erste programmierbare Hardwarebaustein (1) eine Konfigurationsüberwachungsschnittstelle (9), ausgestaltet zum Signalisieren des Konfigurationsvorgangs der Logik (4), aufweist.

3. Anordnung nach Anspruch 2, wobei das Schaltelement (3) mit der Konfigurationsüberwachungsschnittstelle (9) derart verbunden und ausgestaltet ist, dass bei Signalisierung eines Konfigurationsvorgangs durch die Konfigurationsüberwachungsschnittstelle (9) ein Zugriff auf die Debuggingschnittstelle (8) unterbindbar ist.

4. Anordnung nach einem der vorhergehenden Ansprüche, mit einem Konfigurationsschaltelement (11) ausgestaltet zum Ansteuern des Schaltelements (3).

5. Anordnung nach Anspruch 4, wobei das Konfigurationsschaltelement (11) mit der Konfigurationsüberwachungsschnittstelle (9) verbunden und ausgestaltet ist, bei Signalisierung eines Konfigurationsvorgangs den Zugriff auf die Debuggingschnittstelle (8) durch Ansteuerung des Schaltelements (3) zu unterbinden.

6. Anordnung nach Anspruch 4 oder 5, wobei das Schaltelement (3) mit der Debuggingschnittstelle (8) mittels des Konfigurationsschaltelements (11) derart verbunden ist, dass bei einem Konfigurationsvorgang ein Zugriff auf die Debuggingschnittstelle (8) wahlweise möglich oder nicht möglich ist.

7. Anordnung nach Anspruch 6, wobei das Konfigurationsschaltelement (11) ausgestaltet ist, in einem zur Debuggingschnittstelle (8) übertragenen Ansteuersignal (13) eine Bitfolge zu erkennen, die einen Konfigurationsvorgang bewirkt.

8. Anordnung nach einem der Ansprüche 4 bis 7, wobei in einer Speichereinrichtung (12) eine Information hinterlegt ist, nach der sich bestimmt, ob der Zugriff über das Konfigurationsschaltelement (11) möglich oder nicht möglich ist.

9. Anordnung nach einem der Ansprüche 4 bis 8, wobei das Konfigurationsschaltelement (11) als CPLD, als FPGA, als Prozessor oder als Kombination zweier oder mehrerer der genannten Typen von programmierbaren Hardwarebausteinen ausgestaltet ist.

10. Anordnung nach Anspruch 2, wobei die Konfigurationsüberwachungsschnittstelle (9) als Teil der Datenschnittstelle (7) ausgestaltet ist, und der programmierbare Hardwarebaustein (1) eine Logik (4) aufweist, die an dem Teil der Datenschnittstelle (7) einen Konfigurationsvorgang signalisiert.

11. Anordnung nach Anspruch 2, wobei die Konfigurationsüberwachungsschnittstelle (9) als separate und dedizierte Konfigurationsüberwachungsschnittstelle ausgestaltet ist.

12. Anordnung nach einem der vorhergehenden Ansprüche, wobei die Debuggingschnittstelle (8) als JTAG-Schnittstelle vorzugsweise nach IEEE-Standard 1149.1 ausgestaltet ist.

13. Anordnung nach Anspruch 7, wobei das Konfigurationsschaltelement (11) ein Verzögerungselement aufweist, wobei das Verzögerungselement ausgestaltet ist, an den ersten programmierbaren Hardwarebaustein (1) übertragene Signale zu verzögern.

14. Anordnung nach einem der vorhergehenden Ansprüche, wobei die Anordnung einen zweiten programmierbaren Hardwarebaustein (2) aufweist, die Datenschnittstelle (7) zum Kommunizieren der Logik (4) mit dem zweiten programmierbaren Hardwarebaustein (2) verbunden und der zweite programmierbare Hardwarebaustein (2) ausgestaltet und vorgesehen ist, den ersten programmierbaren Hardwarebaustein (1) zu konfigurieren.

15. Anordnung nach Anspruch 14, wobei der erste programmierbare Hardwarebaustein (1) als FPGA und der zweite programmierbare Hardwarebaustein (2) als Prozessor oder als FPGA ausgestaltet ist.

16. Anordnung nach einem der vorhergehenden Ansprüche, wobei die Konfigurationsschnittstelle (5) und die Debuggingschnittstelle (8) durch eine außerhalb des ersten programmierbaren Hardwarebausteins (1) implementierte Schaltung bereitgestellt sind und durch die Schaltung die Konfigurationsschnittstelle (5) und die Debuggingschnittstelle (8) mit einer einzigen Schnittstelle des ersten programmierbaren Hardwarebausteins (1) verbunden oder verbindbar sind.
